(19) **Europäisches Patentamt / European Patent Office / Office européen des brevets**

(11) **EP 3 230 764 B1**

(12) **FASCICULE DE BREVET EUROPEEN**

(45) Date de publication et mention de la délivrance du brevet:
**24.06.2020 Bulletin 2020/26**

(51) Int Cl.:
**G01S 7/41** (2006.01)  **G01S 13/24** (2006.01)
**G01S 13/95** (2006.01)

(21) Numéro de dépôt: **15762546.8**

(22) Date de dépôt: **04.09.2015**

(86) Numéro de dépôt international:
**PCT/EP2015/070280**

(87) Numéro de publication internationale:
**WO 2016/091407 (16.06.2016 Gazette 2016/24)**

(54) **PROCEDE DE DETECTION RADAR DISTINGUANT LES ECHOS DE PLUIE ET RADAR METTANT EN OEUVRE UN TEL PROCEDE**

RADARDETEKTIONSSYSTEM ZUR UNTERSCHEIDUNG VON REGENECHOS UND RADAR ZUR DURCHFÜHRUNG DIESES VERFAHRENS

RADAR DETECTION SYSTEM DISTINGUISHING RAIN ECHOES AND RADAR IMPLEMENTING SUCH A METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.12.2014 FR 1402838**

(43) Date de publication de la demande:
**18.10.2017 Bulletin 2017/42**

(73) Titulaire: **THALES**
**92400 Courbevoie (FR)**

(72) Inventeurs:
- **ENDERLI, Cyrille**
  **F-78851 Elancourt Cedex (FR)**
- **LOMBARD, Mathias**
  **F-78851 Elancourt Cedex (FR)**
- **SCHAUB, Marie-Françoise**
  **F-78851 Elancourt Cedex (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A1- 2 400 316    EP-A2- 0 147 305**
**US-A- 4 881 077**

- **MARZOUG M ET AL: "Improved Range Profiling Algorithms Of Rainfall Rate From A Spaceborne Radar With Path-integrated Attenuation Constraint", 19900520; 19900520 - 19900524, 20 mai 1990 (1990-05-20), pages 2463-2466, XP010002030, cité dans la demande**
- **C. Z. VAN DE BEEK ET AL: "Performance of high-resolution X-band radar for rainfall measurement in The Netherlands", HYDROLOGY AND EARTH SYSTEM SCIENCES DISCUSSIONS, vol. 6, no. 5, 23 septembre 2009 (2009-09-23), pages 6035-6085, XP055200375, ISSN: 1812-2108, DOI: 10.5194/hessd-6-6035-2009 cité dans la demande**
- **URS GERMANN ET AL: "Radar precipitation measurement in a mountainous region", QUARTERLY JOURNAL OF THE ROYAL METEOROLOGICAL SOCIETY, vol. 132, no. 618, 1 juillet 2006 (2006-07-01), pages 1669-1692, XP055200377, ISSN: 0035-9009, DOI: 10.1256/qj.05.190 cité dans la demande**
- **J C Nicol ET AL: "Techniques for improving ground clutter identification", IAHS Publ. 3XX, 1 avril 2011 (2011-04-01), XP055200381, Extrait de l'Internet: URL:http://www.met.rdg.ac.uk/radar/publica tions/WRaH_025_Nicol_rev.pdf [extrait le 2015-07-06] cité dans la demande**

- **VALLIAPPA LAKSHMANAN ET AL:** "An Automated Technique to Quality Control Radar Reflectivity Data", JOURNAL OF APPLIED METEOROLOGY AND CLIMATOLOGY, vol. 46, no. 3, 1 mars 2007 (2007-03-01), pages 288-305, XP055038019, ISSN: 1558-8424, DOI: 10.1175/JAM2460.1 cité dans la demande
- **YINGUANG LI ET AL:** "A new approach to detect the ground clutter mixed with weather echoes", RADAR CONFERENCE (RADAR), 2011 IEEE, IEEE, 23 mai 2011 (2011-05-23), pages 622-626, XP031902176, DOI: 10.1109/RADAR.2011.5960612 ISBN: 978-1-4244-8901-5 cité dans la demande
- **Bart Geerts:** "P10.9 AIRBORNE RADAR AND PASSIVE MICROWAVE-BASED CLASSIFICATION AND CHARACTERIZATION OF TROPICAL PRECIPITATION PROFILES", , 18 juillet 2001 (2001-07-18), XP055200394, Extrait de l'Internet: URL:https://ams.confex.com/ams/pdfpapers/2 1954.pdf [extrait le 2015-07-06] cité dans la demande
- **P P ALBERONI ET AL:** "Use of the vertical reflectivity profile for identification of anomalous propagation", METEOROLOGICAL APPLICATIONS, vol. 8, no. 3, 1 septembre 2001 (2001-09-01), pages 257-266, XP055200399, ISSN: 1350-4827, DOI: 10.1017/S1350482701003012 cité dans la demande
- **J Sugier ET AL:** "Detection and removal of clutter and anaprop in radar data using a statistical scheme based on echo fluctuation", Copernicus GmbH, 1 janvier 2002 (2002-01-01), pages 17-24, XP055200403, Extrait de l'Internet: URL:http://copernicus.org/erad/online/erad -17.pdf [extrait le 2015-07-06] cité dans la demande
- **YINGUANG LI ET AL:** "Scan-to-Scan Correlation of Weather Radar Signals to Identify Ground Clutter", IEEE GEOSCIENCE AND REMOTE SENSING LETTERS, IEEE SERVICE CENTER, NEW YORK, NY, US, vol. 10, no. 4, 1 juillet 2013 (2013-07-01), pages 855-859, XP011516187, ISSN: 1545-598X, DOI: 10.1109/LGRS.2012.2226233 cité dans la demande
- **O. RAAF ET AL:** "Image-Filtering Techniques for meteorological radar", 2008 IEEE INTERNATIONAL SYMPOSIUM ON INDUSTRIAL ELECTRONICS, 1 juin 2008 (2008-06-01), pages 2561-2565, XP055200412, DOI: 10.1109/ISIE.2008.4677297 ISBN: 978-1-42-441665-3 cité dans la demande
- **D. E. RUPP ET AL:** "Multiplicative cascade models for fine spatial downscaling of rainfall: parameterization with rain gauge data", HYDROLOGY AND EARTH SYSTEM SCIENCES, vol. 16, no. 3, 6 janvier 2012 (2012-01-06), pages 671-684, XP055200426, DOI: 10.5194/hess-16-671-2012 cité dans la demande
- **RAYMOND WEXLER ET AL:** "Radar Reflectivity and Attenuation of Rain", JOURNAL OF APPLIED METEOROLOGY, vol. 2, no. 2, 1 avril 1963 (1963-04-01), pages 276-280, XP055200435, ISSN: 0021-8952, DOI: 10.1175/1520-0450(1963)002<0276:RRAAOR>2.0 .CO;2 cité dans la demande
- **Walther Åsen ET AL:** "A COMPARISON OF MEASURED RAIN ATTENUATION, RAIN RATES AND DROP SIZE DISTRIBUTIONS", , 4 janvier 2002 (2002-01-04), XP055200491, Extrait de l'Internet: URL:http://www.ursi.org/Proceedings/ProcGA 02/papers/p1815.pdf [extrait le 2015-07-07] cité dans la demande
- **R Uijlenhoet ET AL:** "Hydrology and Earth System Sciences Stochastic simulation experiment to assess radar rainfall retrieval uncertainties associated with attenuation and its correction", Earth Syst. Sci. Earth Syst. Sci. Discuss, 19 mars 2008 (2008-03-19), pages 587-601, XP055200502, Extrait de l'Internet: URL:http://www.hydrol-earth-syst-sci.net/1 2/587/2008/hess-12-587-2008.pdf [extrait le 2015-07-07] cité dans la demande

**Description**

La présente invention concerne un procédé de détection radar pour distinguer les échos de pluie des échos de sol. Elle concerne également un radar mettant en œuvre un tel procédé. Elle s'applique par exemple dans le domaine des radars aéroportés à courtes distances de détection où un problème à résoudre est notamment la distinction des échos de pluie des échos de sol.

Ces radars de courtes portes portées, sont par ailleurs non ambigus en distance. Ils peuvent être agiles en fréquence dans la bande X, autour de 10 GHz.

Aux fréquences de fonctionnement des radars aéroportés, la pluie génère des échos souvent non négligeables et pouvant être de puissance comparable avec les échos de sol dans certains cas de présence de fortes pluies. La présence d'échos de pluies peut alors provoquer un arrêt forcé des modes de fonctionnement adressés, voire des erreurs de navigation du porteur.

Discriminer les échos de surface des échos atmosphériques, notamment ceux dus à la pluie, est un problème souvent rencontré dans les applications météorologiques où sont employés des radars de surface. La majorité d'entre eux fonctionne en bande S ou C, où l'atténuation des ondes lors de leur propagation dans la pluie n'est pas gênante, même si certains sont conçus pour opérer en bande X en raison notamment des avantages de compacité et de coût, comme décrit notamment dans le document de C.Z. van de Beek et al., "Performance of High-Resolution X-Band Radar for Rainfall Measurement in the Netherlands", Hydrol. Earth Syst. Sci. Discuss., vol.6, pp.6035-6085, Sept. 2009. Il existe aussi un radar spatial en bande Ku dédié aux mesures de précipitations tropicales. Contrairement au problème adressé par l'invention, ce sont les échos de sol qui sont alors considérés comme une gêne alors que les échos de pluie sont d'intérêt principal - les mesures fournies par les radars météorologiques sont d'ailleurs directement fournies en une unité spécifique de « réflectivité » (en $mm^6/m^3$, notée $Z$) qui est pertinente pour estimer un taux de pluie dans une zone donnée.

Bien que des informations de Doppler ou de polarimétrie s'avèrent utiles, dans de nombreux cas seules les mesures de puissance (ou de réflectivité) dans le domaine instrumenté en distances et en angles sont disponibles pour préciser la provenance des échos reçus. Le cadre le plus restreint dans lequel se situe l'invention est celui du radar non cohérent et non polarimétrique, bien qu'elle reste valable plus généralement.

Le document EP0147305 décrit un procédé de discrimination d'échos de pluie et des échos dus au sol pour un radar météorologique.

Dans les cas des radars météorologiques de surface, les échos de sol classiquement dus au relief et objets rencontrés peuvent être instrumentés préalablement en temps sec, puis utilisés pour éliminer les échos de sol et/ou corriger les mesures de pluie suivant des méthodes d'interpolation, de plus proches voisins, de pondération, ou de pistage élémentaire des zones de pluie. Le choix du site d'installation a également une importance certaine. Cette approche « statique » n'est évidemment pas applicable simplement au cas d'un radar mobile. Une alternative possible est d'utiliser des sources d'information externes au radar pour localiser les zones de pluie, comme des modèles numériques de terrain, un réseau de radar météorologiques ou d'autres sources d'information mais ce type de solutions sort du cadre de l'invention.

Cependant, les échos les plus gênants en météorologie sont ceux dus aux anomalies de propagation, elles-mêmes dues à certains schémas de variations de l'indice de réfraction du milieu sur les grandes distances sondées (des centaines de kilomètres). Les conditions les plus problématiques sont celles de « super-réfraction », où une fraction du faisceau radar (lobe principal ou secondaire) est dévié vers le sol et peut de surcroît être piégé dans un conduit de propagation proche du sol comme dans un guide d'onde. Dans de telles conditions, il arrive que le faisceau radar touche le sol plusieurs fois jusqu'à des centaines de kilomètres de distance, créant de nombreux et puissants échos indésirables comparables à des échos de fortes pluies. Afin d'isoler ces derniers, des approches dynamiques sont nécessaires car les conditions de propagation sont par nature variables en temps et en espace, et donc difficilement prévisibles et caractérisables. Bien que le contexte soit différent des modes radars à courte portée faisant l'objet de l'invention, il est instructif d'examiner la manière dont les échos de sol non prévisibles sont traités dans les publications.

Dans leur très grande majorité, les approches publiées se placent au niveau d'une carte radar comportant les mesures dans un plan angle/distance. Elles définissent différents critères à partir de la carte de mesure, de manière plus ou moins ad-hoc, qui alimentent ensuite des arbres de décision (voir le document de U. Germann et al., "Radar Precipitation Measurement in a Mountainous Region", Q.J.R. Meteorol. Soc., vol.132, pp.1669-1692, 2006), des classifieurs Bayésiens (voir le document de J.C. Nicol et al., "Techniques for Improving Ground Clutter Identification", Proc. Weather Radar and Hydrology, Exeter (UK), April 2011), ou des réseaux neuronaux (voir le document de V. Lakshmanan et al., "An Automated Technique to Quality Control Radar Reflectivity Data", J. Applied Meteorology, vol.46, no.3, pp.288-305, March 2007), avec parfois l'utilisation de la logique floue comme par exemple dans le document de Y. Li et al., "A New Approach to Detect the Ground Clutter Mixed with Weather Echoes", IEEE Radar Conference, pp.622-626, Kansas City (MO), USA, 23-27 May 2011. Parmi les critères les plus utilisés l'on peut citer l'étendue verticale de gradient de réflectivité horizontale ou verticale (voire la structure 3D du champ de réflectivité), qui s'est montrée efficace pour discriminer les échos de surface, y compris les échos de mer, en condition de super-réfraction. Les profils de réflectivité sont par ailleurs également utilisés dans le document de B. Geerts, "Airborne Radar and Passive Microwave-Based Classification and Characterization of Tropical Precipitation Profiles", 30th International Conference on Radar Meteorology, Munich, Germany, 18-24 July 2001, dans un contexte aéroporté et spatial pour distinguer les précipitations de type convectif de celles de type stratiforme. Le gradient de réflectivité n'est cependant pas transposable au cas aéroporté car c'est un critère qui reflète la physique de propagation avec une visée vers le haut à partir du sol, très particulière aux radars météorologiques comme le montre notamment le document de P.P. Alberoni et al., "Use of the Vertical Reflectivity Profile for Identification of Anomalous Propagation", Meteorol. Appl., vol.8, pp.257-266, 2001.

D'autres critères pouvant être employés avec des radars non cohérents sont ceux liés aux fluctuations temporelles d'impulsion à impulsion comme dans le document de J. Sugier et al., "Detection and Removal of Clutter and Anaprop in Radar Data Using a Statistical Scheme Based on Echo Fluctuation", Proc. ERAD'02, pp.17-24, 2002, ou de pointage à pointage d'une même zone comme dans le document de Y. Li et al., "Scan-to-Scan Correlation of Weather Radar Signals to Identify Ground Clutter", IEEE Geoscience and Remote Sensing Letters, vol.10, no.4, pp.855-859, July 2013. Ces approches sont fondées sur la stationnarité relative de la puissance des échos de surface par rapport à ceux de la pluie. Elles sont mises en défaut dans le contexte de l'invention en raison d'une part du déplacement rapide du porteur pendant l'émission des impulsions radar, et d'autre part en raison de l'agilité de fréquence d'impulsion à impulsion, caractéristique de certains modes, et rendant les échos de sol fluctuants.

Enfin, des critères plus généraux de texture, issus du domaine du traitement d'images et basés sur les matrices de co-occurence comme notamment dans le document de O. Raaf, A. Adane, "Image-Filtering Techniques for Meteorological Radar", IEEE International Symposium on Industrial Electronics (ISIE), pp.2561-2565, Cambridge, 30 June - 2 July 2008 - pouvant être calculés de manière rapide - ont également été proposés. Cependant le choix des « offsets » pour le calcul de la matrice de cooccurrence a un impact important sur les résultats et il n'y a pas de méthode clairement établie pour les sélectionner.

Dans un autre ordre d'idée, des études théoriques et empiriques ont révélé un caractère auto-similaire dans les champs de précipitations, permettant d'appréhender leur très grande variabilité à la fois temporelle et spatiale, comme décrit par exemple dans le document de T.M. Over, V.J. Gupta, "A Space-Time Theory of Mesoscale Rainfall using Random Cascades", J. Geophys. Res., vol.101, pp.26319-26331, 1996. Dans le document de B. Haddad et al., « Analyse de la Dimension Fractale des échos radar en Algérie, France et Sénégal », Télédétection,vol.5, n°4, pp.299-306, 2006, la dimension fractale des échos de pluie dans les images radar ne suffit pas à bien les distinguer des échos de sol ce qui justifie le passage à une analyse multi-fractale plus fine. L'analyse multi-fractale est exploitée avec plus de succès notamment dans le document de M. Khider et al., « Analyse Multifractale des Echos Radar par la Méthode des Maximums des Modules de la Transformée en Ondelette (MMTO) 2D pour les Sites de Bordeaux (France), Sétif (Algérie) : Application à l'Elimination des Echos Parasites », Revue Télédétection, vol.8, no.4, pp.271-283, 2008, pour séparer les échos de surface des échos de pluie, ou encore dans divers travaux de simulation et prévision des champs de précipitations comme décrits par exemple dans le document de D.E. Rupp et al., Multiplicative Cascade Models for Fine Spatial Downscaling of Rainfall : Parametrization with Rain Gauge Data, Hydrol. Earth. Syst. Sci., vol.16, pp.671-684, 2012. Ce type d'approche paraît intéressant mais requiert une complexité de mise en œuvre relativement élevée. D'autre part le choix des coefficients multi-fractaux pertinents n'est pas évident a priori.

Employés conjointement, les critères mentionnés sont plus ou moins caractéristiques des échos de sol (notamment ceux issus de propagation anormale) mais supposent généralement implicitement que le radar ne bouge pas et vise vers le haut, hypothèse effectivement vérifiée dans le cas des radars de surface mais pas dans le cas des radars aéroportés possédant une vitesse propre non nulle.

Un autre défaut général des nombreuses approches faisant usage des divers critères ci-dessus est qu'elles font intervenir d'une manière ou une autre une phase d'apprentissage avec des jeux de données d'étalonnage. Or dans le contexte de l'invention, une telle phase est exclue car l'environnement est changeant rapidement et l'on en peut pas toujours avoir les données nécessaires ni le temps pour mener à bien une phase d'étalonnage.

Un but de l'invention est notamment de proposer une solution de discrimination des échos de pluie ne nécessitant pas de phase d'apprentissage. A cet effet, l'invention a pour objet un procédé de détection par radar aéroporté pour distinguer des échos de pluie des échos de sol, le balayage dudit radar s'effectuant verticalement et horizontalement de quelques dizaines de degrés par rapport au vecteur vitesse du porteur dudit radar, la distinction des échos de pluie des échos de sol étant effectuée par une analyse de l'atténuation des échos radar, un écho radar étant classé comme un écho de pluie si son atténuation en échelle logarithme en fonction de la distance fluctue autour d'une droite affine selon une loi statistique donnée.

Dans un mode de mise en œuvre particulier, ladite analyse étant réalisée sur un nombre N de portes distance dans au moins un pointage angulaire donné, la puissance dans chaque porte distance étant reçue en écho à un nombre K d'impulsions émises, un modèle log-linéaire avec la distance est testé sur lesdites puissances, un écho étant classé comme un écho de pluie si les N puissances reçues et les distances correspondantes sont conformes audit modèle, lesdites puissances fluctuant autour de ladite droite affine.

Les coefficients dudit modèle log-linéaire sont par exemple estimés à partir des puissances reçues dans les N portes distances. On utilise par exemple la moyenne arithmétique des K puissances reçues dans chaque porte distance en écho audites K impulsions émises, pour l'estimation desdits coefficients.

Les puissances reçues sont par exemple sommées avec des pondérations provenant d'une estimation des paramètres dudit modèle log-linéaire, un écho radar étant classé comme écho de pluie si le résultat de la somme est inférieur à un seuil donné.

Les coefficients dudit modèle log-linéaire sont par exemple estimés selon un critère des moindres carrés.

Dans un mode de mise en œuvre particulier, les coefficients dudit modèle log-linéaire sont estimés selon le critère du maximum de vraisemblance, ladite droite affine étant obtenue par régression linéaire, le résidu de régression linéaire étant calculé pour les puissances reçues en échos aux K impulsions émise, l'écho radar correspondant étant classé comme écho de pluie lorsque le résidu de régression linéaire est inférieur à un seuil donné. Ladite analyse étant réalisée sur un nombre N de portes distance dans un nombre de pointages donné, le résidu de régression linéaire est par exemple calculé pour chaque pointage.

Le bruit dudit modèle log-linéaire est par exemple modélisé comme étant distribué selon une loi de probabilité de la famille log-Gamma.

Le bruit dudit modèle log-linéaire est par exemple assimilé à du bruit gaussien.

L'invention a également pour objet un radar mettant en œuvre un procédé tel que décrit précédemment.

D'autres caractéristiques et avantages de l'invention apparaîtront à l'aide de la description qui suit, faite en regard de dessins annexés qui représentent :

- La figure 1, un exemple de loi de probabilité de la famille log-Gamma ;
- La figure 2, la densité de probabilité du résidu d'une régression linéaire ;
- La figure 3, une représentation de niveaux de confiance en fonction de valeurs de seuils de détection ;
- La figure 4, un exemple de données radar dans un plan distance/angle de visée ;
- Les figures 5a et 5b, des exemples de détection radar en fonction de la distance dans deux pointages particuliers, avec les droites de régression associées ;
- Les figures 6a et 6b, une représentation des résidus de régression linéaire en fonction des pointages, la figure 6b présentant un zoom de la figure 6a ;
- Les figures 7a et 7b, des enregistrements d'échos radar en présence de pluie et les résidus de régression linéaire dans les pointages en site ;
- Les figures 8a et 8b, des enregistrements d'échos radar en présence de pluie et les résidus de régression linéaire dans les pointages en site, dans une autre direction de visée horizontale ;
- Les figures 9a et 9b, des enregistrements d'échos radar en l'absence de pluie et les résidus de régression linéaire correspondants.

En se basant sur des travaux fondateurs de modélisation des effets d'atténuation en bande X dans la pluie, décrits notamment dans le document de K.L.S. Gunn, T.W.R. East, "The Microwave Properties of Precipitation Particles", Q.J.R. Meteorol. Soc., vol.80, pp.522-545, 1954, et dans le document de R. Wexler, D. Atlas, "Radar Reflectivity and Attenuation of Rain", J. Appl. Meteorol., vol.2, pp.276-280, 1963, on peut définir la puissance moyenne $\overline{P}(r)$ reçue en écho à la pluie à une distance $r$ par la relation suivante :

$$\overline{P}(r) = \frac{A}{r^2} Z(r) \exp\left(-0.46 \int_0^r k(s)\,ds\right) \qquad (1)$$

où $A$ est une constante liée aux paramètres du radar (puissance transmise, durées d'impulsions, surface d'antenne notamment) et aux propriétés diélectriques de l'eau, $Z$ est la réflectivité de la pluie dans le volume de résolution à la distance $r$; et la fonction $k(.)$ est l'atténuation spécifique en dB/km supposée négligeable en dehors du nuage.

Le coefficient 0.46 dans l'exponentielle correspond au passage d'une puissance de 10 à une exponentielle, et on note que la puissance moyenne est inversement proportionnelle au carré de la distance car les hydrométéores remplissent entièrement le faisceau radar - contrairement aux cibles ponctuelles, pour lesquelles la puissance moyenne reçue est inversement proportionnelle à la puissance quatrième de la distance.

L'étude de la réflectivité $Z$, ses liens avec le taux de pluie (en mm/h) et l'atténuation spécifique $k$ via des lois en puissance, fait l'objet de nombreuses études pour caractériser les liaisons spatiales fonctionnant généralement au-delà de la bande X, motivées essentiellement par l'évaluation des pertes de propagation entre l'espace et le sol dans différentes régions aux climats variés (voir notamment le document de S.J. Malinga et al., "Computation of Rain Attenuation through Scattering at Microwave and Millimeter Bands in South Africa", Progress In Electromagnetics Research Symposium Proceedings, pp. 959-971, Taipei, 25-28 March 2013. Dans de telles applications, les ondes traversent les nuages de pluie dans un plan fortement incliné vers la verticale et les variations de l'atténuation peuvent être importantes, selon la distribution statistique de la taille des gouttes, comme le montre notamment le document de W. Asen et al., "A Comparison of Measured Rain Attenuation, Rain Rates and Drop Size Distributions", Proc. 27th URSI General Assembly, Session F1, 2002. L'insertion dans la relation (1) de la dépendance entre k(.), Z et le taux de pluie conduit à une équation différentielle qui peut être résolue exactement pour en déduire les corrections à apporter sur les mesures de réflectivité faites par le radar pour tenir compte de l'atténuation dans la pluie ; L'algorithme correspondant est connu sous le nom d'algorithme de Hitschfeld-Bordan, amélioré plus tard en raison des instabilités numériques constatées en cas d'erreurs de calibrage du radar, en particulier par l'algorithme de Marzoug-Amayenc (voir les documents M. Marzoug, P. Amayenc, "Improved Range-Profiling Algorithm of Rainfall Rate from a Spaceborne Radar with Path-Integrated Attenuation Constraint", IEEE Trans. Geoscience and Remote Sensing, vol.29, no.4, pp.584-592, July 1991 et de R. Uijlenhoet, A. Berne, "Stochastic Simulation Experiment to Assess Radar Rainfall Retrieval Uncertainties Associated With Attenuation and its Correction", Hydrol. Earth Syst. Sci., vol.12, pp.587-601, 2008).

La mise en œuvre de ces modèles et algorithmes est cependant complexe et coûteuse en temps de calcul.

Afin d'éviter l'utilisation, aussi bien d'une méthode d'apprentissage que d'un modèle aussi complexe que celui de la relation (1), l'invention caractérise la propagation des ondes dans la pluie par un modèle simplifié. Ayant ainsi caractérisé les échos de pluie, le procédé selon l'invention analyse l'atténuation des échos radars à un angle de visée donné pour décider si celle-ci est conforme à la caractérisation. Cette caractérisation est notamment définie par un modèle physique d'atténuation de la propagation des échos des champs électromagnétique dans la pluie, simplifié dans le contexte des modes radars aéroportés adressés, judicieusement choisi.

Dans le cas des modes aéroportés adressés, selon l'invention, la situation est modélisée plus simplement. Dans ce contexte, le balayage du radar s'effectue verticalement et horizontalement avec une amplitude de quelques dizaines de degrés par rapport au vecteur vitesse du porteur, sur quelques kilomètres de distance radiale. L'invention utilise le fait que la portion de nuage éclairée à un angle de visée vertical donné est localement homogène - tout au moins sur les portes distance où les échos de pluie passent le seuil de détection - ce qui est raisonnable quand le vecteur vitesse n'est pas beaucoup orienté vers la verticale, pour en déduire que les fonctions Z(.) et k(.) sur son support sont approximativement constantes. Les valeurs des constantes associées dépendent des angles de visées, mais, à un pointage radar donné, le terme intégral dans la relation (1) devient alors une fonction affine de la distance et après prise du logarithme, la relation (1) se simplifie en :

$$\ln \bar{P}(r) \approx a + br - 2\ln r \qquad (2)$$

a et b étant des constantes inconnues dépendant des angles de visées verticale et horizontale.

Les fluctuations naturelles des échos de pluie et l'agilité éventuelle de fréquence rendent les mesures de puissances fluctuantes autour de leur espérance conforme à la relation (2), de manière indépendante avec une loi de probabilité classiquement normale. Ainsi pour K impulsions émises, le vecteur X des K mesures complexes dans une porte distance est un vecteur Gaussien, centré, dont la matrice de covariance est multiple de l'identité I - le coefficient étant $\bar{P}$ donné par la relation (2) à la distance correspondant au centre de la porte.

Le procédé selon l'invention utilise alors le modèle suivant sous l'hypothèse H de pluie dans la porte distance n :

$$H \,:\; X_n \;\sim\; \mathcal{N}(0, \bar{P}_n I) \quad ; \quad \ln \bar{P}_n = a + br_n - 2\ln r_n \qquad (3)$$

où N fait référence à la loi normale vectorielle complexe, n est l'indice de porte distance centrée sur la distance $r_n$ (qui est connue), et les $X_n$ sont indépendants dans la porte distance n.

Selon l'invention, un écho de pluie est caractérisé s'il est conforme à ce modèle dans des limites (seuils) à définir qui sont décrites par la suite. En d'autres termes, selon l'invention, un écho de pluie est caractérisé par le fait que sa puissance en échelle logarithmique diminue de façon sensiblement affine avec la distance.

Pour tester la conformité d'échos à ce modèle, une première solution consiste à se baser sur les vecteurs $X_n$ des mesures complexes pour tester l'hypothèse H à un pointage angulaire donné. Elle consiste plus particulièrement à estimer les coefficients a et b et de les substituer dans la fonction de vraisemblance des vecteurs $X_n$. On obtient ainsi un test de l'hypothèse H qui compare une somme pondérée des normes $\|\mathbf{X}_n\|^2$ à un seuil, formant ainsi une première variante d'implémentation de l'invention. Dans un mode de mise en œuvre préféré de l'invention, on utilise la moyenne arithmétique des K puissances reçue dans une porte distance en écho à K impulsions émises. L'invention utilise avantageusement le fait que la moyenne arithmétique des puissances reçues est la grandeur utilisée pour les tests de détection déjà qualifiés en opération. En appelant $m_n$ la moyenne arithmétique des puissances à la porte distance n,

on obtient la relation suivante :

$$m_n = \frac{1}{K}\|X_n\|^2 \;\sim\; \mathcal{G}_{K,1/K}[\bar{P}_n](m_n) = \left(\frac{K}{\bar{P}_n}\right)^K \frac{m_n^{K-1}}{(K-1)!} \exp\left(-K\frac{m_n}{\bar{P}_n}\right) \qquad (4)$$

$g$ faisant référence à la loi Gamma dont l'expression est détaillée ci-dessus. Par suite la variable $\frac{m_n}{\bar{P}_n}$ a une loi Gamma réduite $\mathcal{G}_{K,1/K}[1]$, puis la variable $w_n = \ln\frac{m_n}{\bar{P}_n}$ a une loi log-Gamma réduite notée $\mathcal{LG}_{K,1/K}[1]$ dont l'expression est définie par la relation suivante :

$$\mathcal{LG}_{K,1/K}[1](w_n) = \frac{K^K}{(K-1)!} \exp[K(w_n - e^{w_n})] \qquad (5)$$

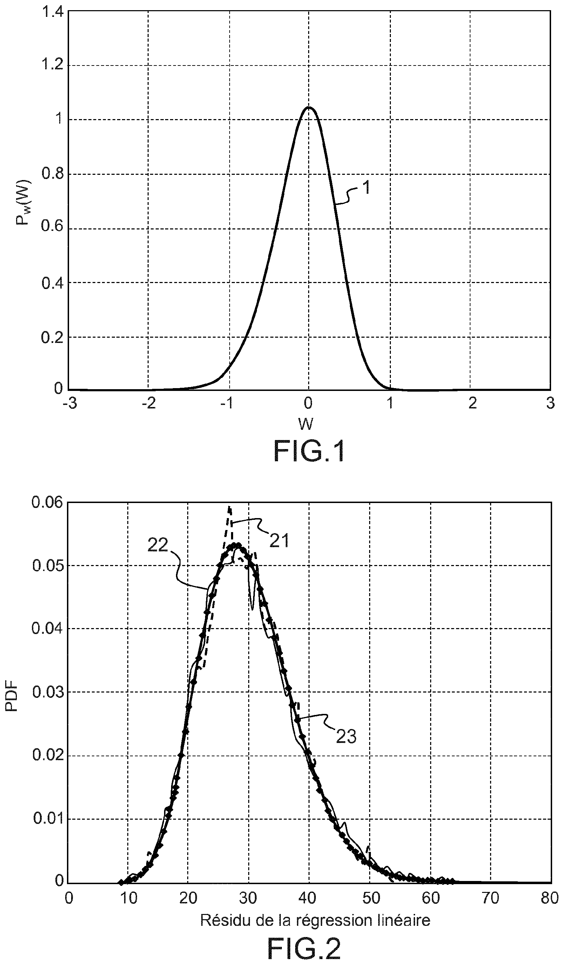

La figure 1 présente la loi log-Gamma réduite pour une valeur typique de $K$. Plus particulièrement, la figure 1 présente par une courbe 1 la densité de la fonction log-Gamma réduite en fonction de la variable $w_n$.

Bien que la densité soit doublement exponentielle, la courbe représentative 1 montre que son allure est proche d'une loi gaussienne, ce qui est confirmé par son kurtosis qu'on peut évaluer à 3,305. Son espérance est $\mu = -0.0731$ et sa variance est $\sigma^2 = 0.1535$.

En posant $y_n = \ln m_n + 2\ln r_n$ comme le logarithme de la moyenne arithmétique des puissances reçues à la porte distance $n$, corrigé du terme logarithmique avec la distance dans le modèle (3), ce dernier devient :

$$H': y_n = a + br_n + w_n \quad ; \quad w_n \sim \mathcal{LG}_{K,\frac{1}{K}}[1] \qquad (6)$$

$a$ et $b$ étant inconnus et les échantillons de bruit $w_n$ étant indépendamment et identiquement distribués selon la loi log-Gamma définie par la relation (5). Le test de l'hypothèse $H'$ est finalement un problème de régression linéaire en présence bruit non Gaussien. Si le bruit était Gaussien, la solution optimale bien connue consisterait à comparer le résidu de la régression linéaire sur les mesures $y_n$ à un seuil :

$$\frac{1}{\sigma^2}\|QY\|^2 < t \;\Rightarrow\; H \qquad (7)$$

où $t$ est un seuil et $Y/\sigma$ est le vecteur des $(y_n)_{n=1\cdots N}$ ramenés à une variance unité (avec $\sigma^2 = 0.1535$) aux N portes distances présentant une détection (l'espérance $\mu$ de la loi log-Gamma n'a pour effet que de modifier légèrement le coefficient a dans le modèle), et $Q$ est le projecteur suivant :

$$Q = I - H(H^*H)^{-1}H^* \qquad (8)$$

$H$ étant la matrice à 2 colonnes ci-dessous :

$$H = \begin{bmatrix} 1 & r_1 \\ \vdots & \vdots \\ 1 & r_N \end{bmatrix} \qquad (9)$$

la n$^{\text{ième}}$ ligne correspondant à la distance où a eu lieu la n$^{\text{ième}}$ détection.

Dans la relation (7) le seuil $t$ peut être fixé simplement en remarquant que la quantité $\|QY\|^2$ a une loi du khi-2 à (N-2) degrés de libertés. En se fixant un taux de confiance $\alpha$, par exemple $\alpha = 1\%$ (ce qui signifie qu'une fois sur cent en moyenne on rejette à tort le modèle de pluie), on en déduit la valeur du seuil via la fonction de répartition du khi-2.

Le traitement faisant l'hypothèse du bruit Gaussien reste valable sur bruit log-Gamma.

Par exemple, la figure 2 montre la densité de probabilité PDF du résidu de la régression linéaire, estimée sur des tirages aléatoires de bruit Gaussien et log-Gamma. La densité théorique du khi-2 est également reportée en pointillés. Plus précisément une première courbe 21 représente la densité de bruit gaussien, une deuxième courbe 22 représente la densité de log-Gamma réduite et une troisième courbe 23 représente la densité théorique du khi 2.

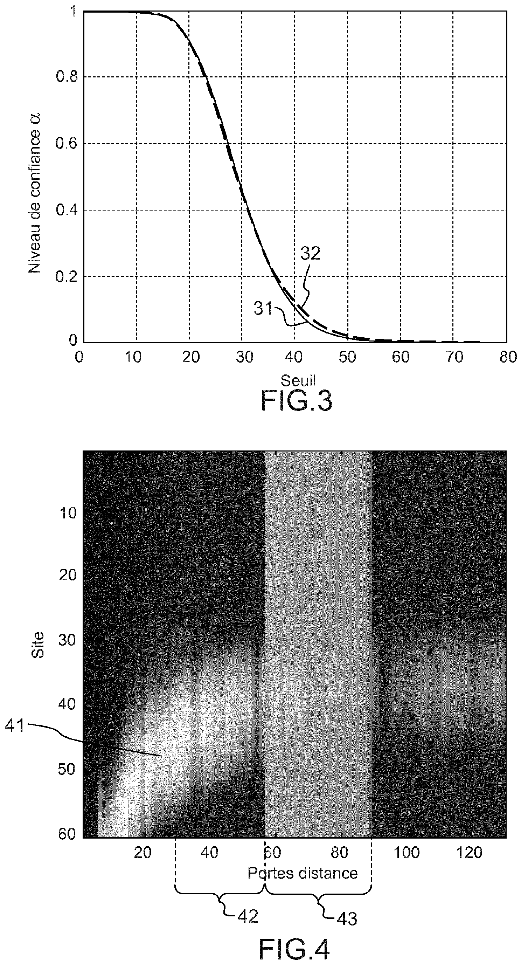

Les courbes 21, 22, 23 montrent une très bonne adéquation des trois densités. De plus, si on calcule les valeurs du niveau de confiance $\alpha$ en fonction de la valeur du seuil pour des bruits Gaussien et log-Gamma, on constate que l'hypothèse normale permet d'atteindre le niveau de confiance voulu avec très peu d'erreur si le bruit a une densité log-Gamma comme le montre la figure 3. Dans cette figure 3 une première courbe 31 et une deuxième courbe 32 représentent le niveau de confiance $\alpha$ en fonction des valeurs de seuil de détection, respectivement pour le bruit gaussien et pour le bruit log-Gamma.

Dans les figures 2 et 3, les paramètres a et b du modèle log-linéaire ont été estimés selon le critère du maximum de vraisemblance dans le cas du bruit log-Gamma. Des résultats très similaires peuvent être obtenus avec une estimation selon un critère des moindres carrés, en validant l'hypothèse de bruit gaussien du modèle pour calculer le seuil de détection.

La figure 4 et les figures 5a, 5b, 6a, 6b illustrent l'application de l'invention à un jeu de données réelles issues d'un radar aéroporté, dans lequel des données de pluie synthétiques sont ajoutées.

La figure 4 présente les données radar dans le plan distance/angle de visée. Plus particulièrement, les données 41 de la figure 4 représentent la moyenne arithmétique de la puissance reçue dans les portes distance du radar en écho à $K$ impulsions émises, en échelle logarithmique, pour un exemple de balayage vertical d'une soixantaine de pointages en site en allant du plus haut vers le plus bas. Les échos de sol sont visibles aux pointages les plus bas 42, d'indices supérieurs à 30, et les échos de pluie synthétiques sont visibles dans tous les pointages 43 entre les portes distances d'indice 60 à 90 environ.

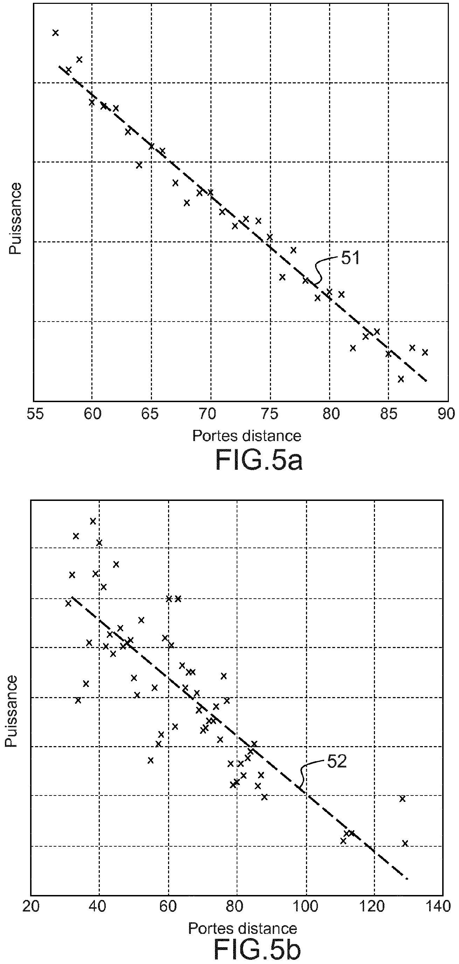

Les figures 5a et 5b représentent les détections du radar en fonction de la distance dans deux pointages particuliers de la figure 4, avec les droites de régression 51, 52 associées. A titre d'exemple, la figures 5a représente les puissances détectés dans les portes distances et la droite de régression associée 51, pour le pointage le plus élevé, par exemple le pointage n°1. La figure 5b représente les puissances détectées et la droite de régression 52 pour le pointage le plus bas, avec des échos de sol, par exemple le pointage n° 40.

Les niveaux de détections en fonction des indices de portes distance sont représentés par des croix.

On pourrait représenter de la même façon d'autres détections et d'autres droites de régressions pour d'autres pointages.

Les droites de régression 51, 52 correspondent au modèle log-linéaire. Elles correspondent donc aux droites affines caractérisant l'atténuation des échos de pluie en échelle logarithmique selon la distance dans le modèle retenu par l'invention. Les niveaux de détections en fonction des indices de portes distance étant représentés par les croix, les figures 5a et 5b montrent leur positionnement par rapport aux droites 51, 52.

Sur la figure 5a où seuls des échos de pluie sont détectés, on mesure un résidu de régression linéaire faible, les croix de détection étant proches et regroupées autours de la droite 51. Plus précisément, le résidu de régression linéaire est relativement faible par rapport au résidu de la figure 5b qui correspond à un pointage plus bas comprenant des échos de sol. Sur cette figure 5b, les croix de détection sont en effet beaucoup plus dispersées autour de la droite 52, avec un grand nombre qui sont éloignées.

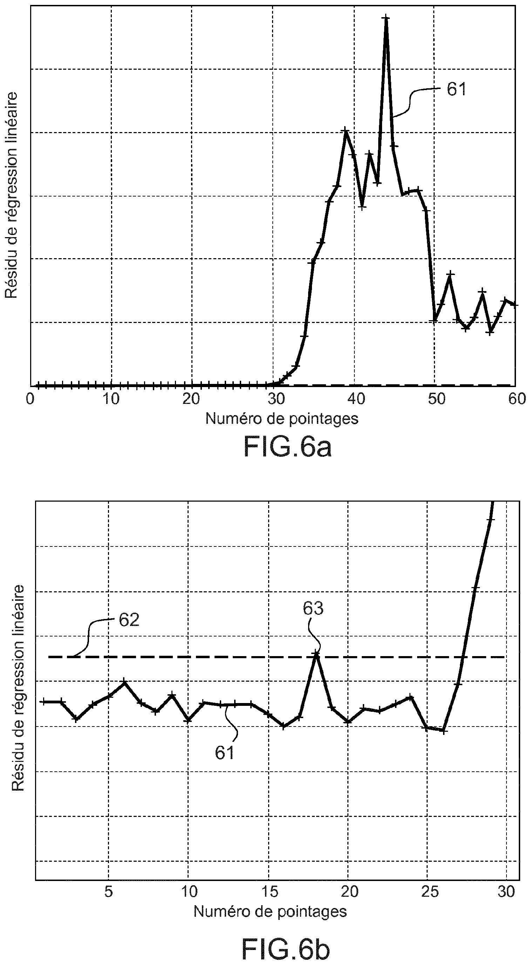

La valeur du résidu de régression linéaire est reportée sur les figures 6a et 6b pour la soixantaine de pointage verticaux de la figure 4, le résidu de régression caractérisant la différence entre la droite de régression 51, 52 et les points de mesures représentés par les croix.

Les figures 6a et 6b représentent par une courbe 61 les résidus de régression linéaire en fonction des indices de pointage. La figure 6b présente un zoom sur les pointages les plus hauts, avec la pluie seule.

La courbe 61 montre que les résidus de pointage sont relativement faibles jusqu'au pointage n° 30 environ. Au-delà de ce pointage ils deviennent beaucoup plus importants. Le pointage n° 30 correspond à celui où des échos de sol commencent à être détectés. La figure 6b montre un zoom sur les pointages de pluie avec la valeur du seuil en pointillés 62 pour un niveau de confiance $\alpha$ = 5%, avec un rejet de l'hypothèse pluie au pointage n°18 correspondant à un niveau de confiance 63 très légèrement inférieur à 5%. On peut appliquer maintenant la même mise en œuvre préférée de l'invention sur des enregistrements en vol avec présence de pluie, le taux de confiance $\alpha$ étant maintenant réglé à une valeur plus stricte, soit $\alpha$ = 1%.

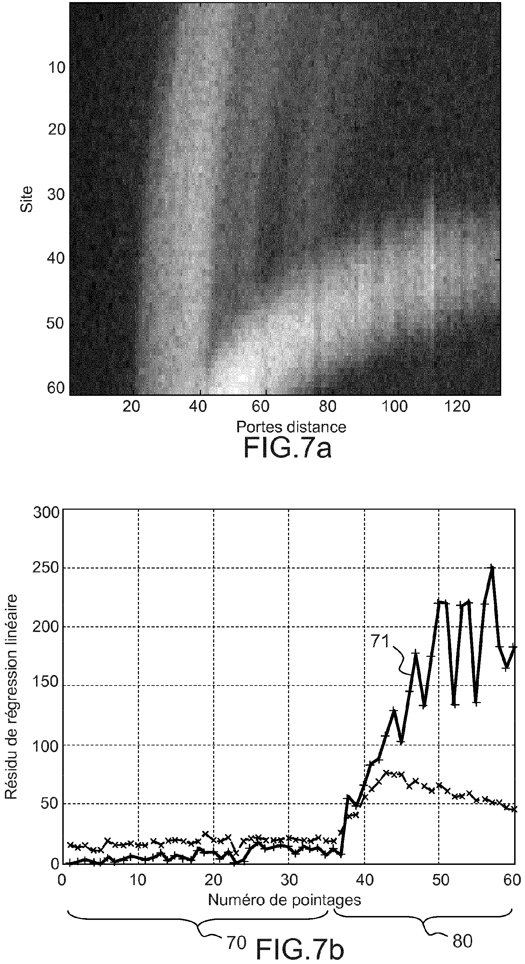

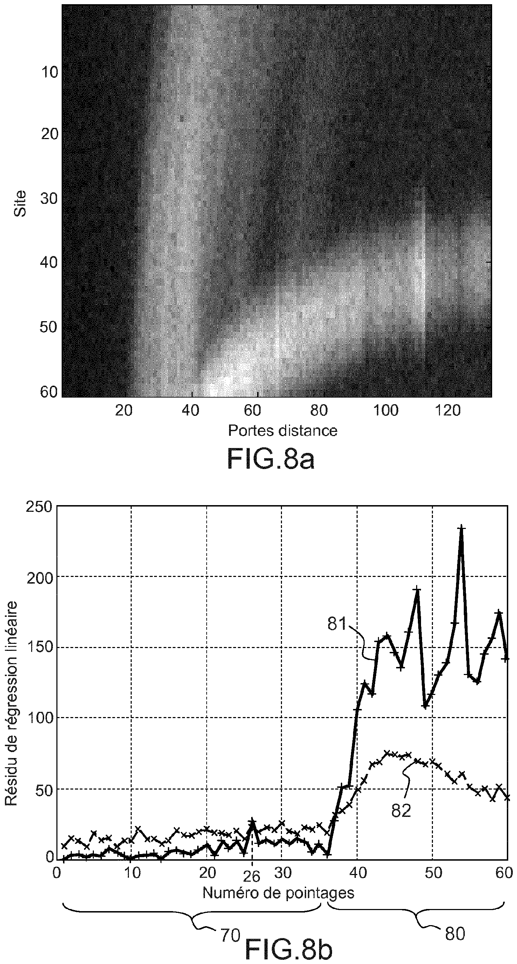

Les figures 7a et 8a, et les figures 7b et 8b montrent des données radar réelles avec des échos de pluie réels et les résidus de régression linéaire dans les pointages en site, de manières similaires aux figures 4 et 6a. Les figures 7a, 7b et les figures 8a, 8b correspondent à deux visées horizontales différentes au cours d'un même vol.

La figure 7a montre les enregistrements en présence de pluie pour une première visée horizontale.

La figure 7b montre par une première courbe 71 les valeurs résidus de régression et montre par une deuxième courbe 72 les valeurs des seuils correspondantes, en fonction des indices ou numéro de pointages correspondant à la première visée horizontale.

La figure 8a montre les enregistrements en présence de pluie pour une deuxième visée horizontale.

La figure 8b montre par une première courbe 81 les valeurs résidus de régression et montre par une deuxième courbe 82 les valeurs des seuils correspondantes, en fonction des indices ou numéro de pointages correspondant à la deuxième visée horizontale.

Dans ces deux cas, les valeurs de résidus de régression restent sous le seuil dans les pointages hauts 70 ne contenant que des échos de pluie et deviennent significativement plus grands et supérieurs au seuil dans les pointages 80 où des échos de sol sont présents. On a un rejet à tort du modèle de pluie dans le pointage n° 26 de la figure 8b. Sur environ 60 pointages analysés contenant de la pluie seule, cela donne un taux de rejet acceptable, compatible d'un taux de rejet fixé par ailleurs.

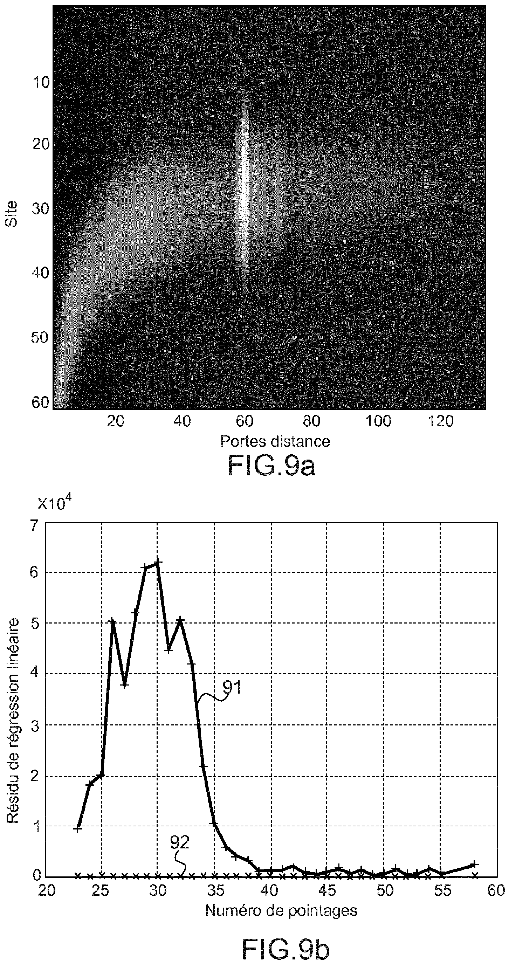

A titre de comparaison, les figures 9a et 9b illustrent respectivement des enregistrements de vol en temps sec et les résidus de régression correspondants dans les pointages en site, de manière similaire aux figures précédentes.

La figure 9a illustre les enregistrements dans les différents pointages en site en fonction des portes distance. La figure 9b montre par une première courbe 91 les valeurs résidus de régression et montre par une deuxième courbe 92 les valeurs des seuils correspondantes, en fonction des indices ou numéro de pointages.

La figure 9b montre que les résidus de régression sont très largement supérieurs au seuil dans les pointages contenant des échos forts, et restent aussi très supérieurs au seuil dans les autres pointages, le taux de confiance maximum dans ce cas étant de $10^{-10}$ environ. L'hypothèse de pluie est donc rejetée dans tous les pointages.

L'invention permet avantageusement de fournir des informations d'angles et de distance lorsque seuls de échos de cibles sont présents, mais aussi lorsque des échos de cibles et de sol sont présent, les deux types d'échos étant bien distingué et regroupés le cas échéant par zones de pointages. Un autre avantage notable de l'invention est sa capacité à distinguer les échos générés par le sol de ceux générés par la pluie dans plus de cas qu'avec les solutions de l'art antérieur. L'invention a encore comme avantage de ne pas nécessiter de phase d'étalonnage particulière préalable à son application.

## Revendications

1. Procédé de détection par un radar aéroporté pour distinguer des échos de pluie des échos de sol, le balayage dudit radar s'effectuant verticalement et horizontalement de quelques dizaines de degrés par rapport au vecteur vitesse du porteur dudit radar, **caractérisé en ce que** la distinction des échos de pluie des échos de sol est effectuée par une analyse de l'atténuation des échos radar, un écho radar étant classé comme un écho de pluie si son atténuation en échelle logarithme en fonction de la distance fluctue autour d'une droite affine (51, 52) selon une loi statistique donnée, que ladite analyse étant réalisée sur un nombre N de portes distance dans au moins un pointage angulaire donné, la puissance dans chaque porte distance étant reçue en écho à un nombre K d'impulsions émises, un modèle log-linéaire avec la distance étant testé sur lesdites puissances, un écho étant classé comme un écho de pluie si les N puissances reçues et les distances correspondantes sont conformes audit modèle, lesdites puissances fluctuant autour de ladite droite affine (51, 52).

2. Procédé selon la revendication 1, **caractérisé en ce que** les coefficients dudit modèle log-linéaire sont estimés à partir des puissances reçues dans les N portes distances.

3. Procédé selon la revendication 2, **caractérisé en ce qu'**on utilise la moyenne arithmétique des K puissances reçues dans chaque porte distance en écho audites K impulsions émises, pour l'estimation desdits coefficients.

4. Procédé selon l'une quelconque des revendications précédentes, **caractérisé en ce que** les puissances reçues sont sommées avec des pondérations provenant d'une estimation des paramètres dudit modèle log-linéaire, un écho radar étant classé comme écho de pluie si le résultat de la somme est inférieur à un seuil donné.

5. Procédé selon l'une quelconque des revendications précédentes, **caractérisé en ce que** les coefficients dudit modèle log-linéaire sont estimés selon un critère des moindres carrés.

6. Procédé selon l'une quelconque des revendications précédentes, **caractérisé en ce que** les coefficients dudit modèle log-linéaire sont estimés selon le critère du maximum de vraisemblance, ladite droite affine (51, 52) étant obtenue par régression linéaire, le résidu de régression linéaire (61, 71, 81) étant calculé pour les puissances reçues en échos aux K impulsions émise, l'écho radar correspondant étant classé comme écho de pluie lorsque le résidu de régression linéaire est inférieur à un seuil donné.

**7.** Procédé selon la revendication 6, **caractérisé en ce que** ladite analyse étant réalisée sur un nombre N de portes distance dans un nombre de pointages donné, le résidu de régression linéaire est calculé pour chaque pointage.

**8.** Procédé selon l'une quelconque des revendications précédentes, **caractérisé en ce que** le bruit dudit modèle log-linéaire est modélisé comme étant distribué selon une loi de probabilité de la famille log-Gamma (22).

**9.** Procédé selon l'une quelconque des revendications précédentes, **caractérisé en ce que** le bruit dudit modèle log-linéaire est assimilé à du bruit gaussien (21).

**10.** Radar, **caractérisé en ce qu'**il comporte des moyens de traitement mettant en œuvre le procédé selon l'une quelconque des revendications précédentes.

**Patentansprüche**

**1.** Detektionsverfahren durch einen luftgestützten Radar zum Unterscheiden von Regenechos von Bodenechos, wobei das Abtasten des Radars senkrecht und waagerecht um einige Zehn Grad in Bezug auf den Geschwindigkeitsvektor des Trägers des Radars erfolgt, **dadurch gekennzeichnet, dass** die Unterscheidung der Regenechos von den Bodenechos durch eine Analyse der Dämpfung der Radarechos erfolgt, wobei ein Radarecho als ein Regenecho eingestuft wird, wenn seine Dämpfung, auf einer logarithmischen Skala angesichts des Abstandes um eine affine Gerade (51, 52) gemäß einem gegebenen statistischen Gesetz fluktuiert, wobei die Analyse an einer Anzahl N an Entfernungs-Gates in mindestens einer gegebenen Winkelpeilung erfolgt, wobei die Leistung in jedem Entfernungs-Gate als Echo mit einer Anzahl an gesendeten K Impulsen empfangen wird, wobei ein log-lineares Modell mit dem Abstand bei den Leistungen getestet wird, wobei ein Echo als ein Regenecho eingestuft wird, wenn die empfangenen N Leistungen und die entsprechenden Abstände dem Modell entsprechen, wobei die Leistungen um die affine Gerade (51, 52) fluktuieren.

**2.** Verfahren nach Anspruch 1, **dadurch gekennzeichnet, dass** die Koeffizienten des log-linearen Modells anhand der in den N Entfernungs-Gates empfangenen Leistungen geschätzt werden.

**3.** Verfahren nach Anspruch 2, **dadurch gekennzeichnet, dass** man einen arithmetischen Durchschnitt der in jedem Entfernungs-Gate empfangenen K Leistungen als Echo der gesendeten K Impulse zum Schätzen der Koeffizienten verwendet.

**4.** Verfahren nach einem der vorhergehenden Ansprüche, **dadurch gekennzeichnet, dass** die empfangenen Leistungen mit Gewichtungen summiert werden, welche einer Schätzung der Parameter des log-linearen Modells entstammen, wobei ein Radarecho als ein Regenecho eingestuft wird, wenn das Ergebnis der Summe einen gegebenen Schwellenwert unterschreitet.

**5.** Verfahren nach einem der vorhergehenden Ansprüche, **dadurch gekennzeichnet, dass** die Koeffizienten des log-linearen Modells gemäß einem Kriterium der kleinsten Quadrate geschätzt werden.

**6.** Verfahren nach einem der vorhergehenden Ansprüche, **dadurch gekennzeichnet, dass** die Koeffizienten des log-linearen Modells gemäß dem Kriterium der maximalen Wahrscheinlichkeit geschätzt werden, wobei die affine Gerade (51, 52) durch lineare Regression erzielt wird, wobei der Restwert der linearen Regression (61, 71, 81) für die als Echo auf die gesendeten K Impulse empfangenen Leistungen berechnet wird, wobei das entsprechende Radarecho als Regenecho eingestuft wird, wenn der Restwert der linearen Regression einen gegebenen Schwellenwert unterschreitet.

**7.** Verfahren nach Anspruch 6, **dadurch gekennzeichnet, dass** die Analyse an einer Anzahl N von Entfernungs-Gates in einer gegebenen Anzahl von Peilungen vorgenommen wird, wobei der Restwert der linearen Regression für jede Peilung berechnet wird.

**8.** Verfahren nach einem der vorhergehenden Ansprüche, **dadurch gekennzeichnet, dass** das Rauschen des log-linearen Modells als gemäß einem Wahrscheinlichkeitsgesetz der Familie log-Gamma (22) verteilt modelliert wird.

**9.** Verfahren nach einem der vorhergehenden Ansprüche, **dadurch gekennzeichnet, dass** das Rauschen des log-linearen Modells einem gauß'schen Rauschen (21) gleichgesetzt wird.

**10.** Radar, **dadurch gekennzeichnet, dass** er Verarbeitungsmittel beinhaltet, welche das Verfahren nach einem der vorhergehenden Ansprüche umsetzen.

**Claims**

**1.** A airborne radar detection method for distinguishing rain echoes from ground echoes, the scanning of said radar being performed vertically and horizontally with an amplitude of a few tens of degrees with respect to the velocity vector of said radar, **characterized in that** the distinction of rain echoes from ground echoes is performed by an analysis of the attenuation of the radar echoes, a radar echo being classed as a rain echo if its attenuation on a logarithm scale as a function of distance fluctuates around an affine straight line (51, 52) according to a given statistical law, said analysis being carried out on a number N of distance gates in at least one given angular pointing, the power in each distance gate being received as echo to a number K of emitted pulses, a model which is log-linear with distance is tested on said powers, an echo being classed as a rain echo if the N powers received and the corresponding distances comply with said model, said powers fluctuating around said affine straight line (51, 52).

**2.** The method as claimed in claim 1, **characterized in that** the coefficients of said log-linear model are estimated on the basis of the powers received in the N distance gates.

**3.** The method as claimed in claim 2, **characterized in that** the arithmetic mean of the K powers received in each distance gate as echo to said K emitted pulses is used for the estimation of said coefficients.

**4.** The method as claimed in any one of the preceding claims, **characterized in that** the powers received are summed with weightings originating from an estimation of the parameters of said log-linear model, a radar echo being classed as rain echo if the result of the sum is less than a given threshold.

**5.** The method as claimed in any one of the preceding claims, **characterized in that** the coefficients of said log-linear model are estimated according to a least squares criterion.

**6.** The method as claimed in any one of the preceding claims, **characterized in that** the coefficients of said log-linear model are estimated according to the maximum likelihood criterion, said affine straight line (51, 52) being obtained by linear regression, the linear regression residual (61, 71, 81) being calculated for the powers received as echoes to the K pulses emitted, the corresponding radar echo being classed as rain echo when the linear regression residual is less than a given threshold.

**7.** The method as claimed in claim 7, **characterized in that** said analysis being carried out on a number N of distance gates in a given number of pointings, the linear regression residual is calculated for each pointing.

**8.** The method as claimed in any one of the preceding claims, **characterized in that** the noise of said log-linear model is modeled as being distributed according to a probability law from the log-Gamma family (22).

**9.** The method as claimed in any one of the preceding claims, **characterized in that** the noise of said log-linear model is regarded as Gaussian noise (21).

**10.** A radar, **characterized in that** it comprises processing means implementing the method as claimed in any one of the preceding claims.

FIG.1

Résidu de la régression linéaire

FIG.2

FIG.3

FIG.4

FIG.5a

FIG.5b

FIG.6a

FIG.6b

FIG.7a

FIG.7b

FIG.8a

FIG.8b

FIG.9a

FIG.9b

EP 3 230 764 B1

# RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0147305 A

**Littérature non-brevet citée dans la description**

- **C.Z. VAN DE BEEK et al.** Performance of High-Resolution X-Band Radar for Rainfall Measurement in the Netherlands. *Hydrol. Earth Syst. Sci. Discuss.,* Septembre 2009, vol. 6, 6035-6085
- **U. GERMANN et al.** Radar Precipitation Measurement in a Mountainous Region. *Q.J.R. Meteorol. Soc.,* 2006, vol. 132, 1669-1692
- **J.C. NICOL et al.** Techniques for Improving Ground Clutter Identification. *Proc. Weather Radar and Hydrology,* Avril 2011
- **V. LAKSHMANAN et al.** An Automated Technique to Quality Control Radar Reflectivity Data. *J. Applied Meteorology,* Mars 2007, vol. 46 (3), 288-305
- **Y. LI et al.** A New Approach to Detect the Ground Clutter Mixed with Weather Echoes. *IEEE Radar Conference,* 23 Mai 2011, 622-626
- **B. GEERTS.** Airborne Radar and Passive Microwave-Based Classification and Characterization of Tropical Precipitation Profiles. *30th International Conference on Radar Meteorology,* 18 Juillet 2001
- **P.P. ALBERONI et al.** Use of the Vertical Reflectivity Profile for Identification of Anomalous Propagation. *Meteorol. Appl.,* 2001, vol. 8, 257-266
- **J. SUGIER et al.** Detection and Removal of Clutter and Anaprop in Radar Data Using a Statistical Scheme Based on Echo Fluctuation. *Proc. ERAD'02,* 2002, 17-24
- **Y. LI et al.** Scan-to-Scan Correlation of Weather Radar Signais to Identify Ground Clutter. *IEEE Geoscience and Remote Sensing Letters,* Juillet 2013, vol. 10 (4), 855-859
- **O. RAAF ; A. ADANE.** Image-Filtering Techniques for Meteorological Radar. *IEEE International Symposium on Industrial Electronics (ISIE),* 30 Juin 2008, 2561-2565
- **T.M. OVER ; V.J. GUPTA.** A Space-Time Theory of Mesoscale Rainfall using Random Cascades. *J. Geophys. Res.,* 1996, vol. 101, 26319-26331

- **B. HADDAD et al.** Analyse de la Dimension Fractale des échos radar en Algérie, France et Sénégal. *Télédétection,* 2006, vol. 5 (4), 299-306
- **M. KHIDER et al.** Analyse Multifractale des Echos Radar par la Méthode des Maximums des Modules de la Transformée en Ondelette (MMTO) 2D pour les Sites de Bordeaux (France), Sétif (Algérie) : Application à l'Elimination des Echos Parasites. *Revue Télédétection,* 2008, vol. 8 (4), 271-283
- **D.E. RUPP et al.** Multiplicative Cascade Models for Fine Spatial Downscaling of Rainfall : Parametrization with Rain Gauge Data. *Hydrol. Earth. Syst. Sci.,* 2012, vol. 16, 671-684
- **K.L.S. GUNN ; T.W.R. EAST.** The Microwave Properties of Precipitation Particles. *Q.J.R. Meteorol. Soc.,* 1954, vol. 80, 522-545
- **R. WEXLER ; D. ATLAS.** Radar Reflectivity and Attenuation of Rain. *J. Appl. Meteorol.,* 1963, vol. 2, 276-280
- **S.J. MALINGA et al.** Computation of Rain Attenuation through Scattering at Microwave and Millimeter Bands in South Africa. *Progress In Electromagnetics Research Symposium Proceedings,* 25 Mars 2013, 959-971
- **W. ASEN et al.** A Comparison of Measured Rain Attenuation, Rain Rates and Drop Size Distributions. *Proc. 27th URSI General Assembly, Session F1,* 2002
- **M. MARZOUG ; P. AMAYENC.** Improved Range-Profiling Algorithm of Rainfall Rate from a Spaceborne Radar with Path-Integrated Attenuation Constraint. *IEEE Trans. Geoscience and Remote Sensing,* Juillet 1991, vol. 29 (4), 584-592
- **R. UIJLENHOET ; A. BERNE.** Stochastic Simulation Experiment to Assess Radar Rainfall Retrieval Uncertainties Associated With Attenuation and its Correction. *Hydrol. Earth Syst. Sci.,* 2008, vol. 12, 587-601

19